# EUROPÄISCHE PATENTSCHRIFT

(11) **EP 3 691 826 B1**
(45) Veröffentlichungstag und Bekanntmachung des Hinweises auf die Patenterteilung: **24.06.2026**
(21) Anmeldenummer: 18779307.0
(22) Anmeldetag: 20.09.2018
(51) Int. Cl.: B23K 11/00, B23K 11/34, B23D 65/00, B23K 31/02, B23K 101/34, B23K 101/20

(54) **VERFAHREN ZUM ANSCHWEISSEN VON HARTSTOFFKÖRPERN AN ZERSPANUNGSWERKZEUGEN DURCH WIDERSTANDSSCHWEISSEN**
METHOD FOR WELDING HARD MATERIAL BODIES ONTO CHIP-REMOVING TOOLS BY RESISTANCE WELDING
PROCÉDÉ POUR LE SOUDAGE DE CORPS DURS SUR DES OUTILS D'USINAGE PAR ENLÈVEMENT DE COPEAUX AU MOYEN D'UN SOUDAGE PAR RÉSISTANCE

(30) Priorität: 05.10.2017 DE 102017123145
(43) Veröffentlichungstag der Anmeldung: 12.08.2020
(73) Patentinhaber: Credé Vermoegensverwaltungs-GmbH + Co. KG, 75181 Pforzheim (DE)
(72) Erfinder: CREDÉ, Marcel, 75173 Pforzheim (DE)
(74) Vertreter: DREISS Patentanwälte PartG mbB
(86) Internationale Anmeldenummer: PCT/EP2018/075533
(87) Internationale Veröffentlichungsnummer: WO 2019/068480

(56) Entgegenhaltungen:
- WO-A1-2015/140345
- DE-A1- 102007 017 962
- US-A- 4 678 887

## Beschreibung

Verfahren zum Anschweißen von Hartstoffkörpern an Zerspanungswerkzeuge, insbesondere an Zähne eines Sägeblatts, insbesondere Band- oder Kreissägeblatts, oder an Bohr-/Fräßwerkzeuge, durch Widerstandsschweißen mittels einer Widerstandsschweißeinrichtung mit einer Schweißelektrode, wobei eine jeweilige Stelle des Werkzeugs und ein jeweiliger Hartstoffkörper durch Einleiten eines Schweißimpulses an- oder aufgeschmolzen und aneinander gefügt werden.

Die Erfindung betrifft weiterhin eine Widerstandsschweißeinrichtung und eine Vorrichtung mit einer Widerstandsschweiß-einrichtung zum Anschweißen von Hartstoffkörpern an Zerspanungswerkzeuge, insbesondere an Zähne eines Sägeblatts, insbesondere Band- oder Kreissägeblatts, oder an Bohr-/Fräßwerkzeuge, durch Widerstandsschweißen.

Beim Widerstandsschweißen werden elektrisch schweißbare Objekte an einer Schweißstelle aneinander gefügt, indem die Schweißobjekte an der Schweißstelle durch Energiezufuhr aufgeschmolzen und typischerweise unter der Wirkung einer Anpresskraft durch Erstarren der Schmelze verschweißt werden.

Beim Erstarren können sich in der entstandenen Schweißverbindung unvorteilhafte Gefügestrukturen, beispielsweise sogenannte Eta-Phasen, ausbilden. Bei Eta-Phasen handelt es sich um Sprödphasen in Hartmetallen, die zu Rissbildungen und Haftungsproblemen an der Schweißstelle führen.

Verfahren und Vorrichtungen der eingangs genannten Art zum Anschweißen von Hartstoffkörpern an Sägeblättern sind bekannt, etwa durch WO 2015/140345 A1 oder US 4,864,896 oder DE 2 135 628 oder US 4,678,887 oder DE 35 33 618 C1**.** Hierbei wird der für jeden Hartstoffkörper benötigte Schweißimpuls in einer vorgegebenen Weise gesteuert oder strom- oder spannungsgeregelt eingeleitet, wobei eine daran anschließende Abkühlphase nicht näher beachtet wurde. Erst im Anschluss hieran wurden mitunter zusätzliche Wärmebehandlungen vorgenommen. US 4,864,896 schlägt etwa vor, die Schweißstelle nach Einleitung des Schweißimpulses mittels Druckluftbeaufschlagung innerhalb von ungefähr 10 Sekunden auf Temperaturen unterhalb von 102°C (250° Fahrenheit) abzuschrecken und daran anschließend eine Temperaturbehandlung bei 315°C - 371°C (600°-700° Fahrenheit) für eine Dauer von 5 - 30 Sekunden auszuführen, indem ein gegenüber dem Schweißimpuls sehr viel geringerer Heizstrom zugeführt wird. DE 10 2007 017 962 A1 offenbart und lehrt, während des eigentlichen Schweißvorgangs zur Verbindung von zwei Bauteilen die Temperatur der Schweißstelle zu erfassen und aus der räumlichen und/oder zeitlichen Verteilung der Temperatur im Bereich der Schweißstelle eine Aussage darüber abzuleiten, ob der Schweißvorgang ordnungsgemäß erfolgt ist, wobei außerdem während des Schweißvorgangs korrigierende Maßnahmen ergriffen werden, falls unerwünschte Abweichungen erkannt werden.

Der Erfindung liegt die Aufgabe zugrunde, bei einem Widerstandsschweißverfahren der eingangs genannten Art die genannten Nachteile zu vermeiden und eine qualitativ hochwertige Schweißverbindung der Hartstoffkörper an dem Zerspanungswerkzeug zu gewährleisten.

Zur Lösung der Aufgabe wird bei einem Schweißverfahren der genannten Art erfindungsgemäß vorgeschlagen, dass nach Einleiten des Schweißimpulses die entstandene

Schweißverbindung in einer Temperaturabkühl- und -haltephase unter weiterer Energiezufuhr über die Widerstandsschweißeinrichtung und deren Schweißelektrode temperiert wird, indem die Temperatur an der Schweißstelle von Werkzeug und Hartstoffkörper erfasst wird und Energie während der Temperaturabkühl- und -haltephase derart zugeführt wird, dass die Temperatur an der Schweißstelle einem vorgegebenen zeitlichen Verlauf folgt und dabei zunächst während einer ersten Teilphase auf einen Wert zwischen 1100°C und 900°C geregelt wird, wobei die Dauer der ersten Teilphase zwischen 20 ms und 100 ms beträgt, und dass die Dauer der Temperaturabkühl- und -haltephase zwischen 20 ms und 3000 ms beträgt.

Erfindungsgemäß wird also die Ausführung einer Temperaturregelung während der Temperaturabkühl- und -haltephase vorgeschlagen. Dabei kann die Energiezufuhr zur Regelung der Temperatur an der Schweißstelle insbesondere durch Regulieren von der Schweißstelle zugeführtem Strom, Spannung oder Leistung erfolgen. Durch weiteres Zuführen von elektrischer Energie an die Schweißstelle nach dem eigentlichen Schweißvorgang kann so die Temperatur an der Schweißstelle geregelt werden und ein kontrolliertes Temperieren und Abkühlen der entstandenen Schweißverbindung gewährleistet werden. Die Temperatur der Schweißverbindung sinkt also nicht unkontrolliert von einer durch den Schweißimpuls hervorgerufenen maximalen Temperatur Tmax ab, sondern sie wird während der Temperaturabkühl- und - haltephase erfasst und derart geregelt, dass sie einem vorgegebenen zeitlichen Verlauf folgt. Hierdurch kann ein zu rasches unkontrolliertes Abkühlen verhindert werden.

Auf diese Weise können sich vorteilhafte Gefügestrukturen in der Schweißverbindung ausbilden, und die Bildung von Sprödphasen, insbesondere Eta-phasen, im Schweißbereich kann vermieden werden oder solche Phasen können wieder aufgelöst werden.

Wenn vorstehend von einem Hartstoffkörper die Rede ist, wird hierunter ein Körper an sich beliebiger Geometrie, insbesondere Kugel, Zylinder, Plattenform, aus einem Hartstoff, insbesondere Hartmetall, Cermet, Schneidkeramik, Diamant, insbesondere beschichtet, verstanden. Bei Hartmetall kann es sich beispielsweise um einen schweißbaren Sinterwerkstoff mit einer Korngröße von 0,2µm - 1,2 µm handeln, insbesondere bestehend aus 6% bis 16% Binder, meist Kobalt (Co), und einem entsprechenden Rest 94% bis 84% Wolframcarbid (WC), insbesondere mit kleinen Mengen Tantal (Ta), Niob (Nb), oder Karbiden, wie zum Beispiel Tantalcarbid (TaC), Titancarbid (TiC), Niobcarbid (NbC). Als Binder können neben Cobalt insbesondere Nickel (Ni) oder Eisen-Kobalt-Nickel-Legierungen (FeCoNi) in Frage kommen. Zur Verbesserung der Schneid- und/oder Gleiteigenschaften kann das Hartmetall eine Beschichtung aus TiC, TiN, Titancarbonitrid (TiCN) oder Aluminiumoxyd (Al₂O₃) umfassen. Bei Cermet und Schneidkeramik handelt es sich beispielweise um schweißbare Sinterwerkstoffe mit keinem oder nur einem geringen Anteil an Wolframcarbid; üblich sind hier Mischcarbide, wie zum Beispiel Titancarbid oder Titannitrid oder Mischungen daraus. Als Binder kommen die vorstehend genannten Binder in Frage.

Der Temperaturverlauf an der Schweißstelle während der Temperaturabkühl- und -haltephase kann insbesondere in Abhängigkeit von dem Material des Hartstoffkörpers und/oder in Abhängigkeit von dem Material des Zerspanungswerkzeugs vorgegeben werden.

Grundsätzlich kann die Temperaturabkühl- und -haltephase unmittelbar oder mit einem zeitlichen Abstand nach Einleiten des Schweißimpulses beginnen. Dazu wird die Temperatur an der Schweißstelle von Werkzeug und Hartstoffkörper erfasst und die entstandene Schweißverbindung unter weiterer Energiezufuhr und gegebenenfalls Kühlleistungszufuhr temperiert, indem die Energie derart zugeführt wird, dass die Temperatur an der Schweißstelle einem vorgegebenen zeitlichen Verlauf folgt und die Schweißstelle im Anschluss an ihre maximale Schweißtemperatur diesem vorgegebenen zeitlichen Verlauf entsprechend temperiert und abgekühlt wird. Die Temperaturabkühl- und -haltephase und damit die Temperaturerfassung und -regelung wird dabei vorzugsweise so unmittelbar nach Einleiten des Schweißimpulses begonnen, dass sichergestellt ist, dass die Temperatur der Schweißstelle noch nicht unter 1200°, insbesondere noch nicht unter 1100°C abgekühlt ist.

Dabei erweist es sich als wesentlich, dass Energie während der Temperaturabkühl- und -haltephase derart zugeführt wird, dass die Temperatur an der Schweißstelle zunächst auf einen Wert zwischen 1100°C und 900°C, insbesondere zwischen 1100°C und 950°C, geregelt wird. Zum Ende der Temperaturabkühl- und -haltephase wird die Temperatur vorteilhafterweise auf einen minimalen Wert zwischen 800°C und 500°C, insbesondere zwischen 700°C und 600°C, geregelt.

Vorteilhafterweise beträgt die Dauer der Temperaturabkühl- und -haltephase zwischen 20 ms und 2000 ms, insbesondere zwischen 20 ms und 1000 ms, insbesondere zwischen 20 ms und 500 ms, insbesondere zwischen 20 ms und 150 ms, insbesondere zwischen 40 ms und 150 ms, insbesondere zwischen 80 ms und 150 ms.

Weiter erweist es sich als vorteilhaft, dass die Temperaturabkühl- und -haltephase eine erste Teilphase umfasst, in der die Temperatur an der Schweißstelle auf einen insbesondere im Wesentlichen konstanten Wert, insbesondere zwischen 900°C und 1100°C, geregelt wird. Die Energie wird während der ersten Teilphase also derart zugeführt, dass die Temperatur an der Schweißstelle, insbesondere konstant, zwischen 900°C und 1100°C gehalten wird. Die Dauer der ersten Teilphase beträgt insbesondere zwischen 20 ms und 100 ms, vorzugsweise zwischen 50 ms und 75 ms.

Weiter erweist es sich als vorteilhaft, dass die Temperaturabkühl- und -haltephase eine der ersten Teilphase nachfolgende zweite Teilphase umfasst, in der die Temperatur derart geregelt wird, dass die Temperatur an der Schweißstelle einem vorgegebenen zeitlichen Verlauf folgend, insbesondere kontinuierlich, abnimmt. Die Energie wird während der zweiten Teilphase also derart zugeführt, dass die Temperatur an der Schweißstelle abnimmt und die Schweißverbindung auf diese Weise kontrolliert abkühlt. Vorzugsweise weist die Temperatur an der Schweißstelle zum Ende der zweiten Teilphase einen Wert zwischen 800°C und 500°C, insbesondere zwischen 700°C und 600°C, auf. Die Dauer der zweiten Teilphase beträgt insbesondere zwischen 20 ms und 100 ms, vorzugsweise zwischen 50 ms und 75 ms.

Grundsätzlich kann die Regelung des Schweißprozesses während des Einleitens des Schweißimpulses in an sich beliebiger Weise erfolgen. Es kann in vorteilhafter Weise vorgesehen sein, dass während des Einleitens des Schweißimpulses Schweißstrom und/oder Schweißleistung und/oder Schweißspannung erfasst werden und Energie derart zugeführt wird, dass Schweißstrom und/oder Schweißleistung und/oder Schweißspannung einem vorgegebenen zeitlichen Verlauf folgen.

Um das Erreichen einer Mindesttemperatur an der Schweißstelle und einen vorgegebenen Temperaturverlauf sicherzustellen, kann es sich als vorteilhaft erweisen, dass auch schon während des Einleitens des Schweißimpulses die Temperatur an der Schweißstelle von Zahn und Hartstoffkörper erfasst wird und Energie derart zugeführt wird, dass die Temperatur an der Schweißstelle einem vorgegebenen zeitlichen Verlauf folgt.

Es kann sich als vorteilhaft erweisen, wenn die Schweißstelle von Hartstoffkörper und Zahn vor Einleiten des eigentlichen Schweißimpulses vorgewärmt wird. Dies kann in vorteilhafter Weise zur Vermeidung von Wärmeeinflusszonen und Rissbildungen in der Schweißverbindung beitragen.

Dabei kann in vorteilhafter Weise vorgesehen sein, dass vor Einleiten des Schweißimpulses während einer Vorwärmphase der Schweißstrom und/oder Schweißleistung und/oder Schweißspannung erfasst werden und Energie derart zugeführt wird, dass Schweißstrom und/oder Schweißleistung und/oder Schweißspannung einem vorgegebenen zeitlichen Verlauf folgen.

Demgegenüber erweist es sich ebenfalls als vorteilhaft, dass vor Einleiten des Schweißimpulses während einer Vorwärmphase die Temperatur an der Schweißstelle von Werkzeug und Hartstoffkörper erfasst wird und Energie derart zugeführt wird, dass die Temperatur an der Schweißstelle einem vorgegebenen zeitlichen Verlauf folgt. Auf diese Weise wird sichergestellt, dass die Temperatur an der Schweißstelle in der Vorwärmphase über den zeitlichen Verlauf einen vorgegebenen Wert erreicht.

Vorteilhafterweise wird in Abhängigkeit von wenigstens einem Umschaltkriterium zwischen der Vorwärmphase und dem Einleiten des Schweißimpulses und/oder zwischen dem Einleiten des Schweißimpulses und der Temperaturabkühl- und -haltephase weitergeschaltet.

Es kann vorteilhafterweise vorgesehen sein, dass das Umschaltkriterium das Ablaufen einer vorgegebenen Zeit oder Erreichen einer bestimmten Temperatur, Spannung, Energie, Widerstand, Schweißtiefe, oder das Über- oder Unterschreiten eines Schwellwerts der genannten Größen umfasst. Im Rahmen der Temperaturregelung erweist es sich als besonders vorteilhaft, dass zwischen den einzelnen Phasen und dem Einleiten des Schweißimpulses in Abhängigkeit des Erreichens einer bestimmten Temperatur weitergeschaltet wird. Insbesondere kann so erreicht werden, dass die Temperatur an der Schweißstelle während des gesamten Schweißprozesses einem vorgegebenen zeitlichen Verlauf folgt. Im Rahmen eines automatisierten Fertigungsprozesses kann es sich ferner als vorteilhaft erweisen, wenn zwischen den einzelnen Phasen und dem Einleiten des Schweißimpulses nach Ablauf einer vorgegebenen Zeit weitergeschaltet wird, um Taktzeiten des Fertigungsprozesses einzuhalten.

In Weiterbildung dieses Erfindungsgedankens erweist es sich als vorteilhaft, dass vor Einleiten des Schweißimpulses der jeweilige Hartstoffkörper durch eine Zentriereinrichtung mit einer Greiferanordnung mit schräg zur Vorschubrichtung aufeinander zu bzw. voneinander weg bewegbaren Greiferbacken quer zu einer Vorschubrichtung des Werkzeugs und in Bezug auf das Werkzeug zentriert wird, und die Greiferbacken nach Ausführung der Zentrierung wieder schräg zur Vorschubrichtung zurückgestellt werden, sodass eine unverdeckte direkte optische und/oder thermische Erfassung der Schweißstelle von der Seite ermöglicht ist. Durch die Zentriereinrichtung wird die Aufgabe der Positionierung des jeweiligen Hartstoffkörpers relativ zu dem Werkzeug gelöst. In diesem Zusammenhang ist mit schräg zur Vorschubrichtung ein Winkel kleiner 90° gemeint, sodass bei schräg zurückgestellten Greiferbacken die Schweißstelle quer zur Vorschubrichtung einsehbar ist.

Ferner ist Gegenstand der Erfindung eine Widerstandsschweißeinrichtung zur Durchführung des Verfahrens nach einem oder mehreren der Ansprüche 1 bis 12, nämlich zum Anschweißen von Hartstoffkörpern an Zerspanungswerkzeuge, insbesondere an Zähne eines Sägeblatts, insbesondere Band- oder Kreissägeblatts, oder an Bohr-/Fräßwerkzeuge, durch Widerstandsschweißen,
- mit einer Schweißelektrode zum Anschweißen eines jeweiligen Hartstoffkörpers an einer jeweiligen Stelle des Werkzeugs, wobei der jeweilige Hartstoffkörper und die jeweilige Stelle des Werkzeugs durch Einleiten eines Schweißimpulses an- oder aufgeschmolzen und aneinander gefügt werden,
- mit einer Einrichtung zur Erfassung der Temperatur an der Schweißstelle von Werkzeug und Hartstoffkörper,
- mit einer elektrischen Steuereinrichtung zum Ausführen des Schweißvorgangs, wobei die Steuereinrichtung so ausgebildet ist und mit der Einrichtung zur Erfassung der Temperatur derart zusammenwirkt, dass über die Widerstandsschweißeinrichtung und deren Schweißelektrode Energie nach Einleiten des Schweißimpulses während einer Temperaturabkühl- und -haltephase in Abhängigkeit der erfassten Temperatur derart zuführbar ist, dass die Temperatur an der Schweißstelle einem vorgegebenen oder vorgebbaren zeitlichen Verlauf folgt und dabei zunächst während einer ersten Teilphase auf einen Wert zwischen 1100°C und 900°C geregelt wird, wobei die Dauer der ersten Teilphase zwischen 20 ms und 100 ms beträgt, und dass die Dauer der Temperaturabkühl- und -haltephase zwischen 20 ms und 3000 ms beträgt.

Als Einrichtung zur Erfassung der Temperatur wird vorzugsweise eine berührungslos arbeitende Erfassungseinrichtung, beispielsweise ein Pyrometer oder ein optischer Temperatursensor, insbesondere eine Wärmebildkamera, eingesetzt. Vorzugsweise ist die Einrichtung zur Erfassung der Temperatur zur Übertragung der erfassten Temperatur an die elektrische Steuereinrichtung ausgebildet. Die Einrichtung zur Erfassung der Temperatur ist vorzugsweise dazu ausgebildet, Temperaturen im Bereich von wenigstens 600°C bis mindestens 1800°C zu erfassen.

Die elektrische Steuereinrichtung zum Ausführen des Schweißvorgangs umfasst vorzugsweise eine speicherprogrammierbare Steuerung und ist vorzugsweise dazu ausgebildet ist, in Abhängigkeit der erfassten Temperatur die Energiezufuhr über die Schweißelektrode an die Schweißstelle in Abhängigkeit der erfassten Temperatur derart zu vorzugeben, dass die Temperatur an der Schweißstelle zumindest zeitweise einem gewünschten zeitlichen Verlauf folgt, also geregelt wird. Die speicherprogrammierbare Steuerung umfasst vorteilhafterweise einen Mikrokontroller, der mit einer Abtastrate von mindestens 50 µsec, vorzugsweise 25 µsec, arbeitet.

Ebenfalls Gegenstand der Erfindung ist eine Vorrichtung zum Anschweißen von Hartstoffkörpern an Zerspanungswerkzeuge, insbesondere an Zähne eines Sägeblatts, insbesondere Band- oder Kreissägeblatts, oder an Bohr-/Fräßwerkzeuge, mit einer Widerstandsschweißeinrichtung gemäß Anspruch 12, wobei die Vorrichtung eine Zentriereinrichtung mit einer Greiferanordnung mit schräg zur Vorschubrichtung aufeinander zu bzw. voneinander weg bewegbaren Greiferbacken zum Zentrieren eines jeweiligen Hartstoffkörpers quer zu einer Vorschubrichtung umfasst. Durch die Zentriereinrichtung wird die Aufgabe der Positionierung des jeweiligen Hartstoffkörpers relativ zu dem Werkzeug gelöst.

Solchenfalls erweist sich als vorteilhaft, dass bei zurückgestellten zweiten Greiferbacken der zweiten Greiferanordnung eine unverdeckte direkte optische und/oder thermische Erfassung durch die Einrichtung zur Erfassung der Temperatur an der Schweißstelle ermöglicht ist.

Weitere Vorteile, Merkmale und Einzelheiten der Erfindung ergeben sich aus den Unteransprüchen und aus der nachfolgenden Beschreibung, in der unter Bezugnahme auf die Zeichnung ein bevorzugtes Ausführungsbeispiel im Einzelnen beschrieben ist. Dabei können die in der Zeichnung dargestellten und in den Ansprüchen und in der Beschreibung erwähnten Merkmale jeweils einzeln für sich oder in beliebiger Kombination erfindungswesentlich sein. In der Zeichnung zeigen:
- Fig. 1: eine schematische Seitenansicht der erfindungsgemäßen Vorrichtung mit Zerspanungswerkzeug;
- Fig. 2: einen schematischen vorgegebenen Temperaturverlauf an einer Schweißstelle, und
- Fig. 3: einen Ausschnitt einer Draufsicht auf die erfindungsgemäße Vorrichtung gemäß Fig.1.

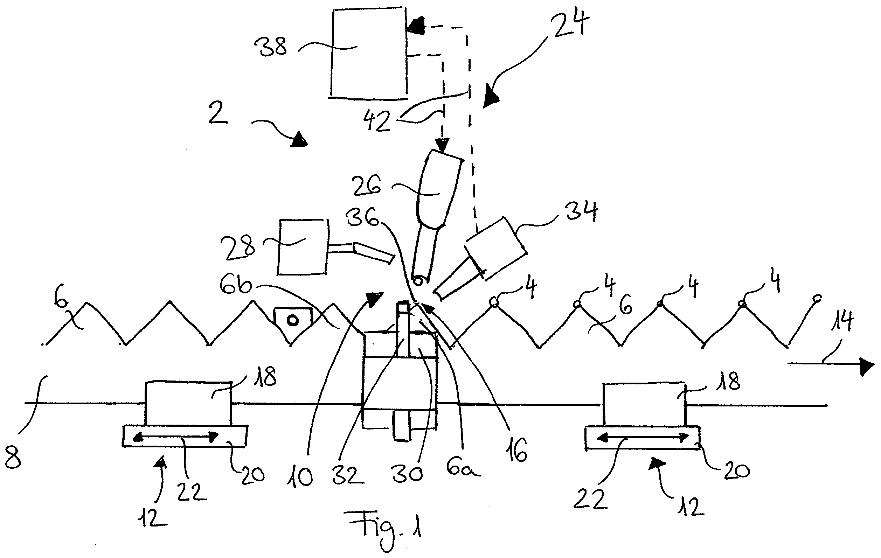

Figur 1 zeigt die insgesamt mit dem Bezugszeichen 2 bezeichnete erfindungsgemäße Vorrichtung zum Anschweißen von Hartstoffkörpern 4 beispielhaft an Zähnen 6 eines Sägeblatts 8 in einer schematischen Darstellung. In der dargestellten Ausführungsform handelt es sich bei dem Sägeblatt 8 um ein Bandsägeblatt. Die Erfindung ist aber auch anwendbar auf Kreissägeblätter, sowie Zerspanungswerkzeuge im Allgemeinen, insbesondere Bohr-/Fräßwerkzeuge.

Das Anschweißen der Hartstoffkörper 4 an den Zähnen 6 des Sägeblatts 8 erfolgt in einem Arbeitsbereich 10 der Vorrichtung 2. Dazu wird das Sägeblatt 8 mit einer Sägeblattvorschubeinrichtung 12 in Vorschubrichtung 14 bewegt, sodass ein jeweiliger intendierter Zahn 6a des Sägeblatts 8 in eine Zielposition 16 im Arbeitsbereich 10 der Vorrichtung 2 gebracht werden kann. Die Sägeblattvorschubeinrichtung 12 umfasst gemäß der dargestellten Ausführungsform Greif- oder Klemmeinrichtungen 18 zum Erfassen des Sägeblatts 8, die auf Vorschubschlitten 20 montiert sind. Die Vorschubschlitten 20 sind beispielsweise mittels eines Antriebs in Richtung des Doppelpfeils 22 parallel zur Vorschubrichtung 14 verfahrbar. Bei dem Antrieb handelt es sich vorzugsweise um einen elektrischen Linearantrieb.

Zum Anschweißen der Hartstoffkörper 4 an den Zähnen 6 des Sägeblatts 8 umfasst die Vorrichtung 2 eine Widerstandsschweißeinrichtung 24 mit einer in den Arbeitsbereich 10 zustellbaren und wieder aus dem Arbeitsbereich 10 rückstellbaren Schweißelektrode 26. Mit einer Zuführeinrichtung 28 wird ein jeweiliger Hartstoffkörper 4 an die Schweißelektrode 26 zugeführt und an diese übergeben. Die Schweißelektrode 26 wird mit dem an sie übergebenen Hartstoffkörper 4 in den Arbeitsbereich 10 der Vorrichtung 2 zugestellt, und der Hartstoffkörper 4 wird dabei bis auf Anschlag an den in der Zielposition 16 befindlichen Zahn 6a des Sägeblatts 4 herangeführt.

Mittels einer ersten Zentriereinrichtung 30 wird das Sägeblatt 8 vor dem Schweißvorgang quer zu Vorschubrichtung 14 zentriert und in der zentrierten Position fixiert. Eine zweite Zentriereinrichtung 32 dient zum Zentrieren des jeweiligen Hartstoffkörpers 4 quer zur Vorschubrichtung 14 vor dem Anschweißen an den jeweiligen intendierten sich in der Zielposition befindlichen Zahn 6a des Sägeblatts 8. Bei der ersten und zweiten Zentriereinrichtung kann es sich beispielsweise um in der DE 10 2017 118 707 beschriebene Zentriereinrichtungen handeln. Insoweit wird auf die genannte Druckschrift Bezug genommen. Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition 16 gebracht werden kann.

Die Widerstandsschweißeinrichtung 24 umfasst eine Einrichtung 34 zur Erfassung der Temperatur an der Schweißstelle 36 von Zahn 6 und Hartstoffkörper 4 und eine elektronische Steuereinrichtung 38 zum Ausführen des Schweißvorgangs. Bei der Einrichtung 34 zur Erfassung der Temperatur handelt es sich beispielsweise um ein Pyrometer oder um eine Wärmebildkamera, die dazu ausgebildet ist, die Temperatur an der und in einem Bereich um die Schweißstelle 36 zu erfassen. Die Einrichtung zur Erfassung der Temperatur ist vorzugsweise dazu ausgebildet, Temperaturen im Bereich von wenigstens 600°C bis mindestens 1800°C zu erfassen. Ferner ist die Einrichtung 34 zur Übertragung der erfassten Temperatur an die Steuereinrichtung 38 ausgebildet und mit dieser verbunden. Dies ist schematisch mit der gestrichelten Linie 42 dargestellt.

Als Steuereinrichtung 38 zum Ausführen des Schweißvorgangs wird vorzugsweise eine speicherprogrammierbare Steuerung eingesetzt, die dazu ausgebildet ist, mittels automatisierter Verarbeitung der erfassten Temperatur einen momentanen Betriebszustand der Schweißelektrode 26 zu bestimmen und die Energiezufuhr über die Schweißelektrode 26 an die Schweißstelle 36 zu regeln. Die speicherprogrammierbare Steuerung umfasst vorteilhafterweise einen Mikrokontroller, der mit einer Abtastrate von mindestens 50 µsec, vorzugsweise 25 µsec, arbeitet. Die Ansteuerung der Schweißelektrode 26 ist schematisch mit der gestrichelten Linie 42 dargestellt. Die Steuereinrichtung 38 ist dazu ausgebildet die Energiezufuhr über die Schweißelektrode 26 an die Schweißstelle 36 in Abhängigkeit der erfassten Temperatur an der Schweißstelle 36 derart zu steuern, dass die Temperatur an der Schweißstelle 36 zumindest zeitweise einem vorgegebenen zeitlichen Verlauf folgt.

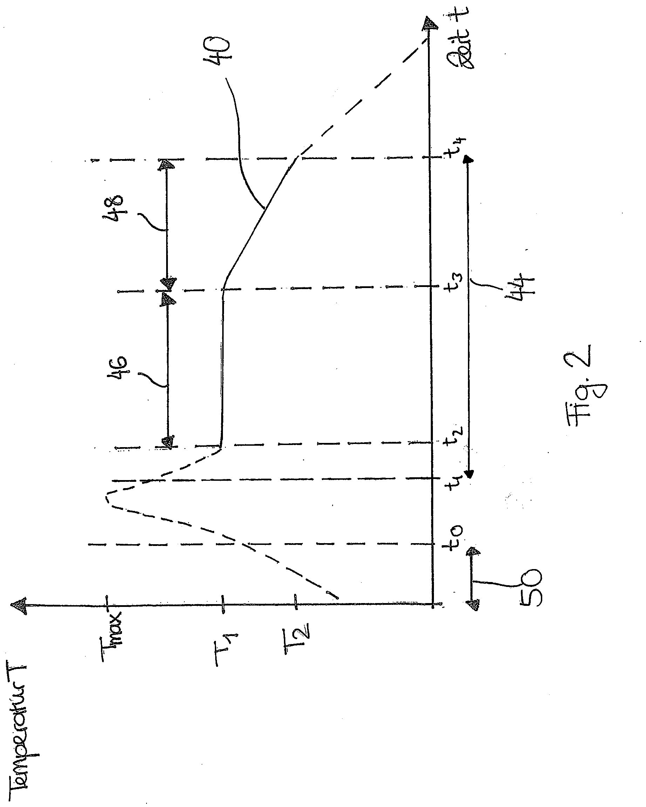

Figur 2 zeigt schematisch einen vorgegebenen zeitlichen unskalierten Verlauf der Temperatur 40 an der Schweißstelle während des Schweißprozesses. Durch Einleiten eines Schweißimpulses wird Energie über die Schweißelektrode derart zugeführt, dass der jeweilige Hartstoffkörper 4 und die jeweilige Stelle des Zahns 6 an- oder aufgeschmolzen werden. Durch Einleiten des Schweißimpulses erreicht die Temperatur an der Schweißstelle einen Wert Tₘₐₓ, bei dem die Schmelztemperatur von Hartstoffkörper 4 und Zahn 6 wenigstens erreicht oder überschritten wird. Nach Einleiten des Schweißimpulses wird in einer nachfolgenden

Temperaturabkühl- und -haltephase 44 die entstandene Schweißverbindung unter weiterer Energiezufuhr temperiert. Dazu wird die Temperatur an der Schweißstelle 36 von hier beispielhaft Zahn 6 und Hartstoffkörper 4 erfasst und Energie derart zugeführt, dass die Temperatur an der Schweißstelle einem vorgegebenen zeitlichen Verlauf folgt. Die Temperaturabkühl- und/oder
-haltephase 44 umfasst eine erste Teilphase 46 und eine der ersten Teilphase 46 nachfolgende zweite Teilphase 48. In der ersten Teilphase 46 wird die Temperatur an der Schweißstelle 36 auf einen (im Wesentlichen) konstanten Wert T₁ zwischen 900°C und 1100°C geregelt.

In der zweiten Teilphase 48 wird die Temperatur derart geregelt, dass die Temperatur an der Schweißstelle 36 über den zeitlichen Verlauf abnimmt, vorzugsweise kontinuierlich abnimmt. Insbesondere wird die Temperatur derart geregelt, dass die Temperatur an der Schweißstelle am Ende der zweiten Teilphase 48 einen Wert T₂ zwischen 800°C und 500°C, insbesondere zwischen 700°C und 600°C, aufweist. Gemäß dem dargestellten Temperaturverlauf 40 beginnt die Temperaturabkühl- und -haltephase 44 zum Zeitpunkt t₁. Die Temperatur wird gemäß der beispielhaft dargestellten Ausführungsform nun zunächst auf einen Wert T₁ geregelt. Zum Zeitpunkt t₂ beginnt die erste Teilphase 46 der Temperaturabkühl- und -haltephase 44. In der ersten Teilphase 46 wird die Temperatur konstant auf dem Wert T₁ gehalten. Die Dauer der ersten Teilphase 46 beträgt zwischen 20 ms und 100 ms, vorzugsweise zwischen 50 ms und 75 ms. Zum Zeitpunkt t₃ beginnt die zweite Teilphase 48, wobei die Dauer der zweiten Teilphase 48 insbesondere zwischen 20 und 100 ms, vorzugsweise zwischen 50 ms und 75 ms beträgt.

Gemäß dem dargestellten zeitlichen Temperaturverlauf 40 kann der Schweißprozess eine Vorwärmphase 50 umfassen, während der die Schweißstelle 36 von Hartstoffkörper 4 und Zahn 6 vorgewärmt wird bis zu einem Zeitpunkt t0 das Einleiten des eigentlichen Schweißimpulses beginnt.

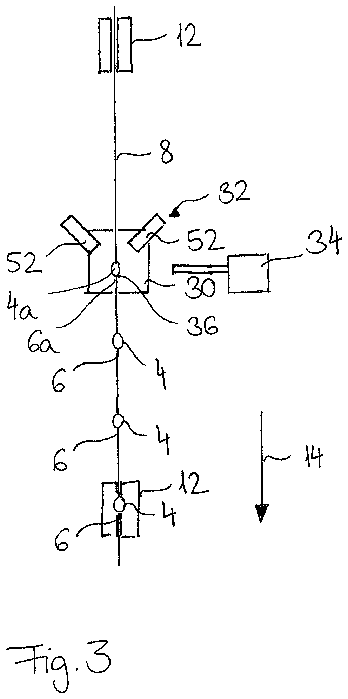

Figur 3 zeigt eine Draufsicht auf einen Teil der erfindungsgemäßen Vorrichtung 2. Der Zahn 6a befindet sich mit angeschweißtem Hartstoffkörper 4a in der Zielposition 16 im Arbeitsbereich der Vorrichtung 2. Die zweite Zentriereinrichtung 32 zum Zentrieren des jeweiligen Hartstoffkörpers 4 quer zur Vorschubrichtung 14 vor dem Anschweißen umfasst eine Greiferanordnung mit schräg zur Vorschubrichtung 14 aufeinander zu bzw. voneinander weg bewegbaren Greiferbacken 52, wobei die Greiferbacken 52 gemäß der dargestellten Ausführungsform schräg zurückgestellt sind, sodass eine unverdeckte direkte optische und/oder thermische Erfassung der Schweißstelle 36 von der Seite her durch die Einrichtung 34 zur Erfassung der Temperatur ermöglicht ist.

## Patentansprüche

1. Verfahren zum Anschweißen von Hartstoffkörpern (4) an Zerspanungswerkzeuge, insbesondere an Zähne (6) eines Sägeblatts (8), insbesondere Band- oder Kreissägeblatts, oder an Bohr-/Fräßwerkzeuge, durch Widerstandsschweißen mittels einer Widerstandsschweißeinrichtung mit einer Schweißelektrode, wobei eine jeweilige Stelle des Werkzeugs und ein jeweiliger Hartstoffkörper (4) durch Einleiten eines Schweißimpulses an- oder aufgeschmolzen und aneinander gefügt werden, **dadurch gekennzeichnet, dass** nach Einleiten des Schweißimpulses die entstandene Schweißverbindung in einer Temperaturabkühl- und
-haltephase (44) unter weiterer Energiezufuhr über die Widerstandsschweißeinrichtung und deren Schweißelektrode temperiert wird, indem die Temperatur an der Schweißstelle (36) von Werkzeug und Hartstoffkörper (4) erfasst wird und Energie während der Temperaturabkühl- und -haltephase (44) derart zugeführt wird, dass die Temperatur an der Schweißstelle (36) einem vorgegebenen zeitlichen Verlauf (40) folgt und dabei zunächst während einer ersten Teilphase (46) auf einen Wert zwischen 1100°C und 900°C geregelt wird, wobei die Dauer der ersten Teilphase zwischen 20 ms und 100 ms beträgt, und die Dauer der Temperaturabkühl- und -haltephase zwischen 20 ms und 3000 ms beträgt.

2. Verfahren nach Anspruch 1, **dadurch gekennzeichnet, dass** Energie während der Temperaturabkühl- und
-haltephase (44) derart zugeführt wird, dass die Temperatur an der Schweißstelle zunächst auf einen Wert zwischen 1100°C und 950°C, und/oder zum Ende der Temperaturabkühl- und -haltephase auf einen minimalen Wert zwischen 800°C und 500°C, insbesondere zwischen 700°C und 600°C, geregelt wird.

3. Verfahren nach Anspruch 1 oder 2, **dadurch gekennzeichnet, dass** die Dauer der Temperaturabkühl- und -haltephase insbesondere zwischen 20 ms und 2000 ms, insbesondere zwischen 20 ms und 1000 ms, insbesondere zwischen 20 ms und 500 ms, insbesondere zwischen 20 ms und 150 ms, zwischen 40 ms und 150 ms, insbesondere zwischen 80 ms und 150 ms, beträgt.

4. Verfahren nach einem oder mehreren der vorhergehenden Ansprüche, **dadurch gekennzeichnet, dass** die Temperaturabkühl- und -haltephase (44) eine der ersten Teilphase (46) nachfolgende zweite Teilphase (48) umfasst, in der die Temperatur derart geregelt wird, dass die Temperatur an der Schweißstelle (36) einem vorgegebenen zeitlichen Verlauf folgend kontinuierlich, abnimmt.

5. Verfahren nach einem oder mehreren der vorhergehenden Ansprüche, **dadurch gekennzeichnet, dass** während des Einleitens des Schweißimpulses Schweißstrom und/oder Schweißleistung und/oder Schweißspannung erfasst werden und Energie derart zugeführt wird, dass Schweißstrom und/oder Schweißleistung und/oder Schweißspannung einem vorgegebenen zeitlichen Verlauf folgen.

6. Verfahren nach einem der Ansprüche 1 bis 4, **dadurch gekennzeichnet, dass** während des Einleitens des Schweißimpulses die Temperatur an der Schweißstelle (36) von Werkzeug und Hartstoffkörper erfasst wird und Energie derart zugeführt wird, dass die Temperatur an der Schweißstelle (36) einem vorgegebenen zeitlichen Verlauf (40) folgt.

7. Verfahren nach einem oder mehreren der vorhergehenden Ansprüche, **dadurch gekennzeichnet, dass** vor Einleiten des Schweißimpulses während einer Vorwärmphase (50) der Schweißstrom und/oder Schweißleistung und/oder Schweißspannung erfasst werden und Energie derart zugeführt wird, dass Schweißstrom und/oder Schweißleistung und/oder Schweißspannung einem vorgegebenen zeitlichen Verlauf folgen.

8. Verfahren nach einem der Ansprüche 1 bis 6, **dadurch gekennzeichnet, dass** vor Einleiten des Schweißimpulses während einer Vorwärmphase (50) die Temperatur an der Schweißstelle (36) von Werkzeug und Hartstoffkörper erfasst wird und Energie derart zugeführt wird, dass die Temperatur an der Schweißstelle (36) einem vorgegebenen zeitlichen Verlauf (40) folgt.

9. Verfahren nach einem oder mehreren der vorhergehenden Ansprüche, **dadurch gekennzeichnet, dass** in Abhängigkeit von wenigstens einem Umschaltkriterium zwischen der Vorwärmphase (50) und dem Einleiten des Schweißimpulses und/oder zwischen dem Einleiten des Schweißimpulses und der Temperaturabkühl- und - haltephase (44) weitergeschaltet wird.

10. Verfahren nach Anspruch 9, **dadurch gekennzeichnet, dass** das Umschaltkriterium das Ablaufen einer vorgegebenen Zeit oder das Erreichen einer bestimmten Temperatur, Spannung, Energie, Widerstand, Schweißtiefe, oder das Über- oder Unterschreiten eines Schwellwerts der genannten Größen umfasst.

11. Verfahren nach einem oder mehreren der vorhergehenden Ansprüche **dadurch gekennzeichnet, dass** vor Einleiten des Schweißimpulses der jeweilige Hartstoffkörper (4) durch eine Zentriereinrichtung (32) mit einer Greiferanordnung mit schräg zur Vorschubrichtung (14) aufeinander zu bzw. voneinander weg bewegbaren Greiferbacken (52) quer zu einer Vorschubrichtung (14) des Werkzeugs (8) und in Bezug auf das Werkzeug (8) zentriert wird, und die Greiferbacken (52) nach Ausführung der Zentrierung wieder schräg zur Vorschubrichtung (14) zurückgestellt werden, sodass eine unverdeckte direkte optische und/oder thermische Erfassung der Schweißstelle (36) von der Seite ermöglicht ist.

12. Widerstandsschweißeinrichtung (24) zur Durchführung des Verfahrens nach einem oder mehreren der vorstehenden Ansprüche, nämlich zum Anschweißen von Hartstoffkörpern (4) an Zerspanungswerkzeuge (8), insbesondere an Zähne (6) eines Sägeblatts, insbesondere Band- oder Kreissägeblatts, oder an Bohr-/Fräßwerkzeuge, durch Widerstandsschweißen,
- mit einer Schweißelektrode (26) zum Anschweißen eines jeweiligen Hartstoffkörpers (4) an einer jeweiligen Stelle des Werkzeugs, wobei der jeweilige Hartstoffkörper (4) und die jeweilige Stelle des Werkzeugs durch Einleiten eines Schweißimpulses an- oder aufgeschmolzen und aneinander gefügt werden,
- mit einer Einrichtung (34) zur Erfassung der Temperatur an der Schweißstelle (36) von Werkzeug (8) und Hartstoffkörper (4),
- mit einer elektrischen Steuereinrichtung (38) zum Ausführen des Schweißvorgangs, **dadurch gekennzeichnet, dass** die Steuereinrichtung (38) so ausgebildet ist und mit der Einrichtung (34) zur Erfassung der Temperatur derart zusammenwirkt, dass über die Widerstandsschweißeinrichtung und deren Schweißelektrode Energie nach Einleiten des Schweißimpulses während einer Temperaturabkühl- und - haltephase (44) in Abhängigkeit der erfassten Temperatur derart zuführbar ist, dass die Temperatur an der Schweißstelle (36) einem vorgegebenen oder vorgebbaren zeitlichen Verlauf (40) folgt und dabei zunächst während einer ersten Teilphase (46) auf einen Wert zwischen 1100°C und 900°C geregelt wird, wobei die Dauer der ersten Teilphase zwischen 20 ms und 100 ms beträgt, und die Dauer der Temperaturabkühl- und -haltephase zwischen 20 ms und 3000 ms beträgt.

13. Vorrichtung (2) zum Anschweißen von Hartstoffkörpern (4) an Zerspanungswerkzeuge (8), insbesondere an Zähne (6) eines Sägeblatts, insbesondere Band- oder Kreissägeblatts, oder an Bohr-/Fräßwerkzeuge, mit einer Widerstandsschweißeinrichtung (24) gemäß Anspruch 12, **dadurch gekennzeichnet, dass** die Vorrichtung (2) eine Zentriereinrichtung (32) mit einer Greiferanordnung mit schräg zur Vorschubrichtung (14) aufeinander zu bzw. voneinander weg bewegbaren Greiferbacken (52) zum Zentrieren eines jeweiligen Hartstoffkörpers (4) quer zu einer Vorschubrichtung (14) umfasst.

## Claims

1. Method for welding hard material bodies (4) onto cutting tools, in particular onto teeth (6) of a saw blade (8), in particular of a band or circular saw blade, or onto drilling/milling tools, by resistance welding by means of a resistance welding device having a welding electrode, wherein a relevant point of the tool and a relevant hard material body (4) are melted or fused and joined to one another by introducing a welding pulse, **characterized in that**, after the welding pulse has been introduced, the temperature of the resulting welded joint is controlled in a temperature cooling and maintaining phase (44), in which energy is further supplied by means of the resistance welding device and the welding electrode thereof, by detecting the temperature at the welding point (36) of the tool and the hard material body (4) and by supplying energy during the temperature cooling and maintaining phase (44) in such a way that the temperature at the welding point (36) follows a specified time curve (40) and is initially regulated to a value between 1100°C and 900°C during a first partial phase (46), wherein the duration of the first partial phase is between 20 ms and 100 ms, and the duration of the temperature cooling and maintaining phase is between 20 ms and 3000 ms.

2. Method according to claim 1, **characterized in that** energy is supplied during the temperature cooling and maintaining phase (44) such that the temperature at the welding point is initially regulated to a value between 1100°C and 950°C, and/or at the end of the temperature cooling and maintaining phase to a minimum value between 800°C and 500°C, in particular between 700°C and 600°C.

3. Method according to claim 1 or claim 2, **characterized in that** the duration of the temperature cooling and maintaining phase is in particular between 20 ms and 2000 ms, in particular between 20 ms and 1000 ms, in particular between 20 ms and 500 ms, in particular between 20 ms and 150 ms, between 40 ms and 150 ms, in particular between 80 ms and 150 ms.

4. Method according to one or more of the preceding claims, **characterized in that** the temperature cooling and maintaining phase (44) comprises a second partial phase (48) following the first partial phase (46), in which second partial phase the temperature is regulated in such a way that the temperature at the welding point (36) decreases continuously following a specified time curve.

5. Method according to one or more of the preceding claims, **characterized in that**, during the introduction of the welding pulse, welding current and/or welding power and/or welding voltage are detected and energy is supplied in such a way that the welding current and/or welding power and/or welding voltage follow a specified time curve.

6. Method according to any of claims 1 to 4, **characterized in that**, during the introduction of the welding pulse, the temperature at the welding point (36) of the tool and the hard material body is detected and energy is supplied in such a way that the temperature at the welding point (36) follows a specified time curve (40).

7. Method according to one or more of the preceding claims, **characterized in that**, prior to the introduction of the welding pulse, during a preheating phase (50), the welding current and/or welding power and/or welding voltage are detected and energy is supplied in such a way that the welding current and/or welding power and/or welding voltage follow a specified time curve.

8. Method according to any of claims 1 to 6, **characterized in that**, prior to the introduction of the welding pulse, during a preheating phase (50), the temperature at the welding point (36) of the tool and the hard material body is detected and energy is supplied in such a way that the temperature at the welding point (36) follows a specified time curve (40).

9. Method according to one or more of the preceding claims, **characterized in that**, depending on at least one switching criterion, there is further switching between the preheating phase (50) and the introduction of the welding pulse and/or between the introduction of the welding pulse and the temperature cooling and maintaining phase (44).

10. Method according to claim 9, **characterized in that** the switching criterion comprises a specified time elapsing or a certain temperature, voltage, energy, resistance, welding depth being reached, or the aforementioned variables exceeding or being below a certain threshold value.

11. Method according to one or more of the preceding claims, **characterized in that**, prior to the introduction of the welding pulse, the relevant hard material body (4) is centered transversely to an advance direction (14) of the tool (8) and in relation to the tool (8), by a centering device (32) comprising a gripper arrangement having gripper jaws (52) which can be moved toward or away from one another obliquely to the advance direction (14), and the gripper jaws (52) are returned to be oblique to the advance direction (14) after the centering has been carried out, so that an unobstructed direct optical and/or thermal detection of the welding point (36) from the side is allowed.

12. Resistance welding device (24) for carrying out the method according to one or more of the preceding claims, namely for welding hard material bodies (4) onto cutting tools (8), in particular onto teeth (6) of a saw blade, in particular of a band or circular saw blade, or onto drilling/milling tools, by resistance welding,
- comprising a welding electrode (26) for welding a relevant hard material body (4) onto a relevant point of the tool, wherein the relevant hard material body (4) and the relevant point of the tool are melted or fused and joined to one another by introducing a welding pulse,
- comprising a device (34) for detecting the temperature at the welding point (36) of the tool (8) and the hard material body (4),
- comprising an electrical control device (38) for carrying out the welding process, **characterized in that** the control device (38) is designed and interacts with the device (34) for detecting the temperature in such a way that energy can be supplied by means of the resistance welding device and the welding electrode thereof after the introduction of the welding pulse, during a temperature cooling and maintaining phase (44), depending on the detected temperature, such that the temperature at the welding point (36) follows a specified or specifiable time curve (40) and is initially regulated to a value between 1100°C and 900°C during a first partial phase (46), wherein the duration of the first partial phase is between 20 ms and 100 ms, and the duration of the temperature cooling and maintaining phase is between 20 ms and 3000 ms.

13. Apparatus (2) for welding hard material bodies (4) onto cutting tools (8), in particular onto teeth (6) of a saw blade, in particular of a band or circular saw blade, or onto drilling/milling tools, the apparatus comprising a resistance welding device (24) according to claim 12, **characterized in that** the apparatus (2) comprises a centering device (32) having a gripper arrangement having gripper jaws (52) which can be moved toward or away from one another obliquely to an advance direction (14) in order to center a relevant hard material body (4) transversely to the advance direction (14).

## Revendications

1. Procédé pour le soudage de corps en matériau dur (4) sur des outils d'enlèvement de copeaux, en particulier sur des dents (6) d'une lame de scie (8), en particulier d'une lame de scie à ruban ou de scie circulaire, ou sur des outils de perçage/fraisage, par soudage par résistance au moyen d'un dispositif de soudage par résistance comportant une électrode de soudage, dans lequel un emplacement respectif de l'outil et un corps en matériau dur (4) respectif sont fondus ou mis en fusion et assemblés l'un à l'autre par l'introduction d'une impulsion de soudage, **caractérisé en ce qu'**après l'introduction de l'impulsion de soudage, la liaison soudée obtenue est régulée en température dans une phase de refroidissement et de maintien de la température (44) avec un autre apport d'énergie par l'intermédiaire du dispositif de soudage par résistance et de son électrode de soudage en détectant la température au niveau de l'emplacement de soudage (36) de l'outil et du corps en matériau dur (4) et en apportant de l'énergie pendant la phase de refroidissement et de maintien de la température (44), de telle sorte que la température au niveau de l'emplacement de soudage (36) suit une courbe temporelle (40) prédéfinie et est ainsi d'abord régulée pendant une première phase partielle (46) à une valeur comprise entre 1100°C et 900°C, dans lequel la durée de la première phase partielle est comprise entre 20 ms et 100 ms, et la durée de la phase de refroidissement et de maintien de la température est comprise entre 20 ms et 3000 ms.

2. Procédé selon la revendication 1, **caractérisé en ce que** de l'énergie est apportée pendant la phase de refroidissement et de maintien de la température (44) de telle sorte que la température au niveau de l'emplacement de soudage est d'abord régulée à une valeur comprise entre 1100°C et 950°C, et/ou, à la fin de la phase de refroidissement et de maintien de la température, à une valeur minimale comprise entre 800°C et 500°C, en particulier entre 700°C et 600°C.

3. Procédé selon la revendication 1 ou 2, **caractérisé en ce que** la durée de la phase de refroidissement et de maintien de la température est en particulier comprise entre 20 ms et 2000 ms, en particulier entre 20 ms et 1000 ms, en particulier entre 20 ms et 500 ms, en particulier entre 20 ms et 150 ms, entre 40 ms et 150 ms, en particulier entre 80 ms et 150 ms.

4. Procédé selon l'une ou plusieurs des revendications précédentes, **caractérisé en ce que** la phase de refroidissement et de maintien de la température (44) comprend une seconde phase partielle (48) qui suit la première phase partielle (46) et dans laquelle la température est régulée de telle sorte que la température au niveau de l'emplacement de soudage (36) diminue de manière continue en suivant une courbe temporelle prédéfinie.

5. Procédé selon l'une ou plusieurs des revendications précédentes, **caractérisé en ce que**, pendant l'introduction de l'impulsion de soudage, le courant de soudage et/ou la puissance de soudage et/ou la tension de soudage sont détectés et de l'énergie est apportée de telle sorte que le courant de soudage et/ou la puissance de soudage et/ou la tension de soudage suivent une courbe temporelle prédéfinie.

6. Procédé selon l'une des revendications 1 à 4, **caractérisé en ce que**, pendant l'introduction de l'impulsion de soudage, la température au niveau de l'emplacement de soudage (36) de l'outil et du corps en matériau dur est détectée et de l'énergie est apportée de telle sorte que la température au niveau de l'emplacement de soudage (36) suit une courbe temporelle (40) prédéfinie.

7. Procédé selon l'une ou plusieurs des revendications précédentes, **caractérisé en ce que**, avant l'introduction de l'impulsion de soudage pendant une phase de préchauffage (50), le courant de soudage et/ou la puissance de soudage et/ou la tension de soudage sont détectés et de l'énergie est apportée de telle sorte que le courant de soudage et/ou la puissance de soudage et/ou la tension de soudage suivent une courbe temporelle prédéfinie.

8. Procédé selon l'une des revendications 1 à 6, **caractérisé en ce que**, avant l'introduction de l'impulsion de soudage pendant une phase de préchauffage (50), la température au niveau de l'emplacement de soudage (36) de l'outil et du corps en matériau dur est détectée et de l'énergie est apportée de telle sorte que la température au niveau de l'emplacement de soudage (36) suit une courbe temporelle (40) prédéfinie.

9. Procédé selon l'une ou plusieurs des revendications précédentes, **caractérisé en ce que**, en fonction d'au moins un critère de commutation, on commute entre la phase de préchauffage (50) et l'introduction de l'impulsion de soudage et/ou entre l'introduction de l'impulsion de soudage et la phase de refroidissement et de maintien de la température (44).

10. Procédé selon la revendication 9, **caractérisé en ce que** le critère de commutation comprend l'écoulement d'un temps prédéfini ou l'atteinte d'une température, d'une tension, d'une énergie, d'une résistance, d'une profondeur de soudage déterminée, ou le dépassement vers le haut ou vers le bas d'une valeur seuil desdites grandeurs.

11. Procédé selon l'une ou plusieurs des revendications précédentes, **caractérisé en ce que**, avant l'introduction de l'impulsion de soudage, le corps en matériau dur (4) respectif est centré, transversalement à une direction d'avance (14) de l'outil (8) et par rapport à l'outil (8), au moyen d'un dispositif de centrage (32) comportant un agencement de préhension comportant des mâchoires de préhension (52) inclinées par rapport à la direction d'avance (14) et se rapprochant ou s'éloignant l'une de l'autre, et les mâchoires de préhension (52) sont ramenées obliquement par rapport à la direction d'avance (14) après l'exécution du centrage, de sorte qu'une détection optique et/ou thermique directe non couverte de l'emplacement de soudage (36) est possible depuis le côté.

12. Dispositif de soudage par résistance (24) pour la mise en œuvre du procédé selon l'une ou plusieurs des revendications précédentes, à savoir pour le soudage par résistance de corps en matériau dur (4) sur des outils d'enlèvement de copeaux (8), en particulier sur des dents (6) d'une lame de scie, en particulier d'une lame de scie à ruban ou de scie circulaire, ou sur des outils de perçage/fraisage,
- comportant une électrode de soudage (26) pour le soudage d'un corps en matériau dur (4) respectif à un emplacement respectif de l'outil, dans lequel le corps en matériau dur (4) respectif et l'emplacement respectif de l'outil sont fondus ou mis en fusion et assemblés l'un à l'autre par l'introduction d'une impulsion de soudage,
- comportant un dispositif (34) pour la détection de la température au niveau de l'emplacement de soudage (36) de l'outil (8) et du corps en matériau dur (4),
- comportant un dispositif de commande (38) électrique pour l'exécution du processus de soudage, **caractérisé en ce que** le dispositif de commande (38) est réalisé et coopère avec le dispositif (34) pour la détection de la température de telle sorte que de l'énergie peut être apportée par l'intermédiaire du dispositif de soudage par résistance et de son électrode de soudage après l'introduction de l'impulsion de soudage pendant une phase de refroidissement et de maintien de la température (44) en fonction de la température détectée, de telle sorte que la température au niveau de l'emplacement de soudage (36) suit une courbe temporelle (40) prédéfinie ou pouvant être prédéfinie et est alors d'abord régulée pendant une première phase partielle (46) à une valeur comprise entre 1100°C et 900°C, dans lequel la durée de la première phase partielle est comprise entre 20 ms et 100 ms, et la durée de la phase de refroidissement et de maintien de la température est comprise entre 20 ms et 3000 ms.

13. Appareil (2) pour le soudage de corps en matériau dur (4) sur des outils d'enlèvement de copeaux (8), en particulier sur des dents (6) d'une lame de scie, en particulier d'une lame de scie à ruban ou de scie circulaire, ou sur des outils de perçage/fraisage, avec un dispositif de soudage par résistance (24) selon la revendication 12, **caractérisé en ce que** l'appareil (2) comprend un dispositif de centrage (32) comportant un agencement de préhension comportant des mâchoires de préhension (52) inclinées par rapport à la direction d'avance (14) et se rapprochant ou s'éloignant l'une de l'autre pour le centrage d'un corps en matériau dur (4) respectif transversalement à une direction d'avance (14).
